# EUROPEAN PATENT APPLICATION

(11) **EP 4 674 498 A1**
(43) Date of publication of application: **07.01.2026**
(21) Application number: 25182026.2
(22) Date of filing: 11.06.2025
(51) Int. Cl.: B01D 5/00, C01B 21/44, C01B 21/46

(54) **METHOD FOR A REGENERATION OF A NITRIC ACID**

(30) Priority: 03.07.2024 EE 202400018 U
(71) Applicant: Osaühing Sporrong Eesti, 93815 Kuressaare (EE)
(72) Inventor: Rannak, Tarmo, 93815 Kuressaare (EE); Tamm, Tarmo, 50090 Tartu (EE); Johanson, Urmas, 50090 Tartu (EE); Tätte, Tauri, 50090 Tartu (EE); Täht, Maarja, 50090 Tartu (EE)
(74) Representative: AAA Patendibüroo OÜ

(57) **Abstract**

The invention relates to a method for a regeneration of a nitric acid, in which the used nitric acid is fed into a regeneration device that comprises a heated receiving tank B and a condenser C connected to it and a collection tank D, and where the regeneration is carried out in two stages. The nitric acid to be regenerated fed to receiving tank B in both the first stage and the second stage is heated under vacuum in receiving tank B in two separate heating cycles.

## Description

### TECHNICAL FIELD

The invention relates to a method for regenerating nitric acid by distillation. More specifically, the invention relates to a method for regenerating nitric acid in small production, where nitric acid is used for cleaning metal blanks, such as in galvanization and enamel plating of metals, wherein the metal blanks of the product are cleaned with nitric acid.

### BACKGROUND ART

A field of use of nitric acid is cleaning metal surfaces of oxide, oil and grease, and other impurities. During the process, the used nitric acid is contaminated and contains impurities.

This causes the need for reprocessing the nitric acid, for which there is no traditional method, and the used contaminated nitric acid is collected and transported to waste handling plant for destruction by incineration.

However, such method causes the need first for storage of the contaminated nitric acid at the place of use, and then the need for transporting the contaminated nitric acid and its destruction as hazardous waste.

Therefore, there is a need to regenerate used and contaminated nitric acid to reuse it again as treated nitric acid.

The present invention provides a method and a system for regenerating nitric acid at its place of use to significantly reduce the need for transporting the used nitric acid elsewhere for its destruction as hazardous waste.

### SUMMARY OF THE INVENTION

The present invention provides a method for regenerating nitric acid, in which the used nitric acid is fed into a regeneration device that comprises a heated receiving tank and a condenser connected to it and a collection tank, and where the regeneration is carried out in two stages.

In the first stage, the nitric acid to be regenerated, i.e., the so-called initial acid fed to the receiving tank, is heated under vacuum in the receiving tank in two heating cycles.

In the first heating cycle, 65 to 75% of the nitric acid in the receiving tank is condensed into the collection tank and the generated condensate is fed from the collection tank until achieving 40% concentration of the condensate into the collection tank of medium fraction, where treated nitric acid with a maximum concentration of up to 40% is stored.

After that, in the second heating cycle, the remaining 35 to 25% of nitric acid in the receiving tank is condensed, the condensate is collected into the collection tank, and the generated condensate is fed from the collection tank into the collection tank of concentrated fraction of nitric acid with a concentration of at least 60% - this is so-called pure nitric acid intended for reuse.

After that, the receiving tank is washed and the washing residue is disposed of. The diluted treated nitric acid stored in the collection tank of diluted treated nitric acid is used for washing.

In the second stage, the distillate of nitric acid collected into the collection tank of medium fraction in the first cycle of the first stage is fed into the receiving tank and heated under vacuum in the receiving tank also in two heating cycles.

In the first heating cycle of the second stage, the nitric acid and water evaporated in the receiving tank are condensed in the condenser and collected into the collection tank, where the concentration of the condensate is up to 20%, and it is fed into the collection tank of diluted treated nitric acid and used later for washing the system.

The second heating cycle of the second stage is continued, until the concentration of nitric acid in the receiving tank reaches a level of at least 58 to 68%, after which the nitric acid is fed from the receiving tank to the collection tank of concentrated fraction - this is so-called pure nitric acid intended for reuse. The 40% condensate of nitric acid collected in the collection tank is fed into the collection tank of nitric acid.

In the first heating cycle of the first stage, up to 70% of the nitric acid stored in the receiving tank is condensed into the collection tank.

Nitric acid with a concentration at least 60% collected in the collection tank of concentrated fraction is recycled.

The collection tank is washed with the mixture of water and nitric acid collected into the collection tank of diluted nitric acid.

Advantages of vacuum distillation used in the method compared to regular distillation.
1) The boiling temperature of the liquid is lower than at normal pressure, which makes the process safer.
2) Safety is ensured in case of a failure of the system, because boiling stops immediately in the absence of vacuum.
3) Boiling at a lower temperature significantly reduces the thermal decomposition of nitric acid.
4) Lower boiling temperature enables to use water as heating medium in the liquid mantle of the distillation vessel, which is good from a safety point of view.
5) For ensuring safety, it is important that in the system the part of the system in contact with hot nitric acid and nitric acid vapors is as compact and simple as possible, comprising only distillation vessel, cooler, and receiver.
6) A high temperature liquid-liquid heat pump enables to reheat the cooled heating water and respectively to cool the heated cooling water, thus saving energy.

The aspects and advantages of the developed process are outlined below.
1) While continuous processes are generally preferred in the industry, in the case of residual acid comprising dissolved salts solid residues form in the distillation vessel by the end of the first stage, which must be removed (dissolved) to prevent obstructions in the system. This makes the process inherently cyclical. The proposed method is cyclical in nature, taking place in two stages.
2) Vacuum distillation of residues of nitric acid in two stages enables to achieve a significantly higher yield, as the process is not limited only to the fraction with sufficient concentration obtained in the first stage, but the fraction of nitric acid with medium concentration, which is not immediately suitable for reuse, is also reprocessed and concentrated. At the same time, the apparatus is much simpler and thus safer than when using a fractional column.
3) The entire process can be automatically controlled.

The possibility to regenerate used nitric acid reduces the cost of purchased nitric acids by approximately 75%. Furthermore, the cost of purchased neutralizing chemicals is reduced by approximately 30%.

### BRIEF DESCRIPTION OF THE DRAWINGS

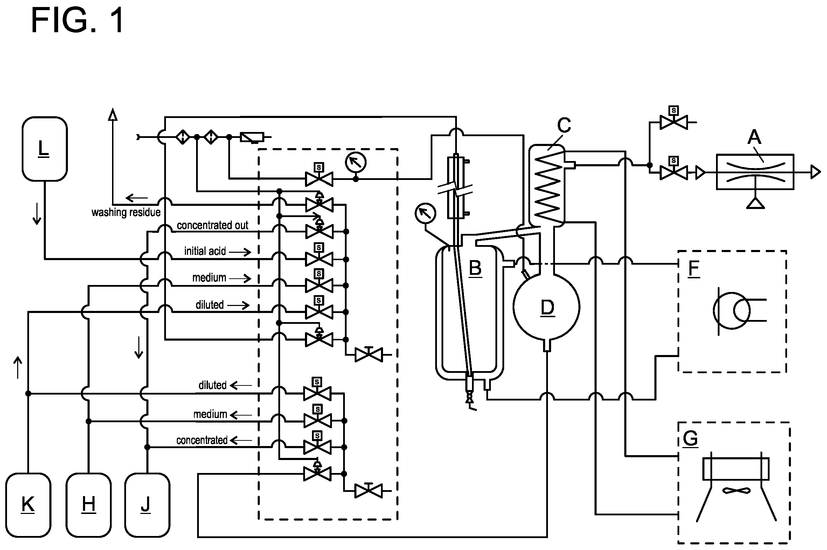

The invention is described below with references to the appended schematic figure, where Figure 1 is a conceptual scheme of the regeneration unit.

### EXAMPLE OF EMBODIMENT

The following reference marks are used in the scheme of the regeneration unit depicted in Figure 1:
A - vacuum pump
B - heated receiving tank
C - condenser
D - collection tank
F - thermostat
G - cooler
H - collection tank of medium fraction
J - collection tank of concentrated fraction
K - collection tank of diluted treated nitric acid
L - tank of initial acid collected from production

The operating principle of the method of the invention is explained with reference to the scheme of the regeneration unit depicted in Figure 1.

First, the vacuum pump A is activated, causing vacuum in the receiving tank B, the condenser C, and the collection tank D.

The used nitric acid, i.e., the so-called initial acid is collected in the production into the tank L, from where it is fed into the regeneration device comprising the heated receiving tank B together with the connected condenser C and the collection tank D.

Under vacuum, the receiving tank B is filled with the initial acid, which is 60% HNO₃, used for cleaning the products, which is saturated with oxides, salts, metals, fats, and other waste.

In the first stage, the nitric acid (so-called initial acid) is fed from the tank L to the receiving tank B, where vacuum is generated, and the initial acid stored in the receiving tank B is heated under vacuum in two cyclic parts. Thermostat F is used **for heating the water mantle surrounding the receiving tank B to 90 °C.**

Cooler G is used for condensing evaporated nitric acid and water in the condenser C.

Nitric acid **treated with vacuum and water mantle is heated to approximately 60 °C** and starts to boil intensely, evaporates, and condenses into the tank D.

In the first heating cycle of the first stage, heating is continued until 65 to 75% of the nitric acid stored in the receiving tank B is condensed in the collection tank D.

After that, the vacuum pump A is stopped and with the controlled vacuum of the system, the generated condensate is fed from the collection tank D to the collection tank of so-called medium fraction H, where treated nitric acid with a concentration of up to 40% is stored (the so-called medium fraction).

After emptying the tank D, vacuum is generated again in the system with the vacuum pump A and distillation of the so-called concentrated fraction starts.

In other words, in the second heating cycle of the first stage, the 35 to 25% of nitric acid remaining in the receiving tank B is condensed and the condensate is collected into the collection tank D. The generated condensate is fed from the collection tank D into the collection tank J of so-called concentrated fraction, with the concentration of nitric acid of at least 60% - this is pure nitric acid suitable for reuse.

For that purpose, the level and temperature in the receiving tank B is monitored with sensors, and the temperature is used to determine when the concentrated fraction **is fully distilled. Based on experience, the threshold is 72 °C, i.e. when the temperature of 72 °C is reached in the receiving tank B, the distillation process is** ended and concentrated treated nitric acid is pushed through valves into the collection tank of concentrated fraction J, where it can be directly taken into reuse.

After that, the receiving tank B is washed and the washing residue is disposed of, i.e. collected into a separate tank for its neutralization elsewhere. The washing phase starts, as the tank contains residual acid with salts and everything else that the initial acid contained and which did not evaporate.

Diluted treated nitric acid stored in the collection tank of diluted treated nitric acid K is used for washing.

Vacuum pump A is activated, receiving tank B is filled with washing solution by opening relevant valves, and washing continues for approximately 30 minutes at approximately 55 degrees.

Salts in the receiving tank B dissolve, some washing solution is distilled into the tank D. At the end of the washing stage, the vacuum pump A is stopped, vacuum is applied, and washing solution is pushed out of the receiving tank B and the tank D.

In the second stage, the nitric acid distillate collected into the collection tank of medium fraction H in the first stage is fed into the receiving tank B. The receiving tank B is filled again with medium fraction generated in result of the primary distillation, which is approximately 40% HNO₃, but clean of any waste.

After that, similar to the first cycle, the nitric acid distillate is heated under vacuum in the receiving tank B, also in two cycles.

The so-called diluted nitric acid is separated into the tank D and the medium fraction is distilled again, in result of which most of the nitric acid remaining in the tank is concentrated 60% HNO₃.

In the first heating cycle of the second stage, the nitric acid and water evaporated in the receiving tank B is condensed in the condenser C and collected into the collection tank D - the density of this nitric acid condensate is up to 20% and it is fed into the collection tank K. It is later used for washing the system.

The second heating cycle of the second stage is continued, until the concentration of nitric acid in the receiving tank B reaches at least 58 to 68%, after which the nitric acid is fed from the receiving tank B into the collection tank of concentrated fraction of the nitric acid J.

40% condensate of nitric acid collected in the collection tank D is fed into the collection tank of medium fraction of the nitric acid H.

The duration of the entire cycle is approximately 7 to 8 hours.

## Claims

1. A method for a regeneration of a nitric acid, in which the used nitric acid is fed into a regeneration device that comprises a heated receiving tank (B) and a condenser (C) connected to it and a collection tank (D), and where the regeneration is carried out in two stages, **characterized in that**
in the first stage the nitric acid to be regenerated fed to the receiving tank (B) is heated under vacuum in the receiving tank (B) in two heating cycles,
in the first heating cycle of the first stage, 65 to 75% of the nitric acid stored in the receiving tank (B) is condensed into the collection tank (D) and the resulting condensate is fed from the collection tank (D) to the collection tank of medium fraction (H), where treated nitric acid with a concentration of up to 40% is stored, then, in the second heating cycle of the first stage, the remaining 35 to 25% of nitric acid in the receiving tank (B) is condensed and the condensate is collected into the collection tank (D), and the generated condensate is fed from the collection tank (D) into the collection tank of concentrated fraction (J), with a concentration of nitric acid of at least 60%,
after that, the receiving tank (B) is washed,
in the second stage, the distillate of nitric acid collected into the collection tank of medium fraction (H) in the first cycle of the first stage is fed into the receiving tank (B) and heated under vacuum in the receiving tank (B) also in two heating cycles, where
in the first heating cycle of the second stage, the nitric acid and water evaporated in the receiving tank (B) are condensed in the condenser (C) and collected into the collection tank (D), where the concentration of the condensate is up to 20%, and it is fed into the collection tank of diluted treated nitric acid (K) and used later for washing the system, and
the second heating cycle of the second stage is continued, until the concentration of nitric acid in the receiving tank (B) reaches at least 58 to 68%, after which the nitric acid is fed from the receiving tank (B) to the collection tank of concentrated fraction of the nitric acid (J), and the nitric acid condensate of up to 40% collected in the collection tank (D) is fed into the collection tank of medium fraction of the nitric acid (H).

2. The method according to claim 1, **characterized in that** in the first heating cycle of the first stage, up to 70% of the nitric acid stored in the receiving tank (B) is condensed into the collection tank (D).

3. The method according to claim 1, **characterized in that** the nitric acid with a concentration of at least 60% collected into the collection tank of concentrated fraction of the nitric acid (J) is recycled.

4. The method according to claim 1, **characterized in that** washing of the receiving tank (B) is performed with diluted nitric acid collected into the collection tank of diluted treated nitric acid (K).
